# DEMANDE DE BREVET EUROPEEN

(11) **EP 4 831 941 A1**
(43) Date de publication de la demande: **28.10.2026**
(21) Numéro de dépôt: 25219492.3
(22) Date de dépôt: 28.11.2025
(51) Int. Cl.: G06V 40/13, G06V 40/12, G06V 40/40

(54) **DISPOSITIF OPTIQUE D ACQUISITION D'EMPREINTE DIGITALE**

(30) Priorité: 24.04.2025 FR 2504340
(71) Demandeur: Idemia Public Security France, 92400 Courbevoie (FR)
(72) Inventeur: POITELON, Olivier, 92400 COURBEVOIE (FR); MAILLARD, Sylvain, 92400 COURBEVOIE (FR); DUMONT, Denis, 92400 COURBEVOIE (FR)
(74) Mandataire: IPS

(57) **Abrégé**

La présente invention concerne un dispositif (1) optique d'acquisition d'empreinte digitale comprenant :
- une source (S) lumineuse,
- une lame optique (2),
- des moyens d'imagerie comprenant :
- un objectif focaliseur (9) ;
- un capteur (12) ;
- un premier miroir;

l'épaisseur de la lame optique (2) entre les deux faces principales (3,4) est supérieure à la première extrémité (A) par rapport à la seconde extrémité (B), formant un décroché (D), et le dispositif comporte une plaque (20) transparente munie d'au moins deux électrodes conductrices transparentes.

## Description

### Arrière-Plan technologique

La présente invention concerne le domaine du relevé des empreintes digitales, et plus précisément des perfectionnements apportés aux dispositifs optiques d'acquisition quant à leur sécurisation, notamment dans le cas de capteurs d'empreintes digitales avec contact.

Les dispositifs de détection d'empreintes digitales peuvent, notamment, servir à authentifier une personne afin que celle-ci soit autorisée à effectuer une opération déterminée: dans ce cas, le dispositif de détection d'empreintes digitales accompagne souvent un autre appareil que la personne authentifiée sera autorisée à utiliser (ordinateur, machine bancaire, ...). La place disponible pour l'implantation du dispositif de détection d'empreintes digitales est alors réduite, et a fortiori le dispositif optique d'acquisition incorporé dans ce dispositif de détection d'empreintes digitales doit être réalisé sous la forme la plus compacte possible, et notamment avec l'épaisseur (ou hauteur) la plus faible possible, par exemple de 15 mm maximum pour une image FAP20 (15,24 mm par 20,32 mm), tout en proposant un dispositif sécurisé anti faux-doigt notamment.

On connaît déjà diverses réalisations de dispositifs optiques d'acquisition compacts destinés à la formation d'une image optique d'empreintes digitales, dont par exemple le dispositif du document EP 1 683 073. Toutefois ces dispositifs compacts connus n'imagent qu'une surface restreinte (inférieure à FAP20, FAP10 par exemple) et/ou ne permettent pas de mesure de caractéristique électriques ou électro-magnétiques du doigt, en particulier pour une détection de faux doigt, par manque de place disponible, notamment pour disposer une nappe de connexion sans réduire la surface d'acquisition, et de fait ne donnent pas totalement satisfaction aux exigences de la pratique.

### Présentation de l'invention

L'invention a pour but de proposer un dispositif optique d'acquisition d'empreinte digitale qui puisse être réalisé sous la forme la plus compacte possible, et notamment avec une épaisseur minimale qui n'excède pas environ 15 mm, et qui soit structurellement aussi simple que possible avec un nombre minimum d'éléments composants de manière que sa fabrication et son montage soient rendus aussi simples, aussi rapides et aussi économiques que possible, tout en disposant de moyens de détection de fraude notamment par apposition de faux-doigt.

A ces fins, l'invention propose un dispositif compact optique d'acquisition propre à former une image optique des empreintes digitales.

Les termes d'amont et aval sont à lire en référence au chemin optique du faisceau lumineux, à savoir de la source lumineuse au capteur.

Selon un aspect de l'invention, il est proposé un dispositif optique d'acquisition d'empreinte digitale comprenant :
- une source lumineuse configurée pour fournir un faisceau lumineux dirigé vers un doigt, une partie du faisceau étant diffusée ou réfléchie par le doigt,
- une lame optique possédant une première et une seconde faces principales parallèles opposées, une partie de ladite première face principale située au voisinage d'une première extrémité de la lame optique constituant une surface d'acquisition pour imager le doigt ;
- des moyens d'imagerie comprenant :
   - un capteur ;
   - un objectif focaliseur ;
   - un premier miroir ;
ledit dispositif étant caractérisé en ce que la première face principale comporte une deuxième partie située entre la première partie et une seconde extrémité de la lame optique opposée à la première extrémité , l'épaisseur de la lame optique entre les deux faces principales de la lame optique n' étant pas uniforme, l'épaisseur de la lame optique entre ladite première partie de la première face principale et la seconde face principale étant supérieure à l'épaisseur de la lame optique entre la deuxième partie de la première face principale et la seconde face principale, formant un décroché entre ladite première partie et ladite deuxième partie de ladite première face principale, et en ce que le dispositif comporte une plaque transparente munie d'au moins deux électrodes conductrices transparentes, les électrodes étant liées à une nappe de connexion, ladite plaque étant disposée au-dessus de ladite première partie de la première face principale de la lame optique et en saillie par rapport à la deuxième partie de la première face principale de la lame optique, créant une lame d'air, une face de ladite plaque comportant une surface d'apposition de doigt. Ce dispositif permet de fournir des mesures d'impédance pour la mise en œuvre, localement ou de manière déportée, d'une détection de fraude par analyse de l'impédance du corps apposé sur la plaque. Ce dispositif permet également d'augmenter la surface imagée d'apposition du doigt sur la plaque par rapport à la surface d'acquisition de la lame optique afin d'obtenir une image de dimensions supérieures en rallongeant le chemin optique. En outre, le décroché, créant une marche, entre la première partie surélevée de la première face principale et la deuxième partie de la première face principale, évite que la plaque transparente et la lame optique ne couplent, l'espace libre créé entre la lame optique et la plaque permettant d'avoir une lame d'air entre les deux et de ne pas perturber les propriétés de réflexion totale et réfraction de chacune des faces. Un autre avantage lié à cette structure tient à ce que la superficie de la face libre de la plaque, supérieure à la superficie de la première face de la lame, permet de disposer de plus d'espace pour réaliser l'étanchéité en appliquant le cordon d'étanchéité ainsi que pour disposer la nappe de connexion. Par 'nappe de connexion', on se réfère notamment à un flexible de connexion électronique.

Notamment, une partie de la face de la plaque opposée à la face de ladite plaque comportant la surface d'apposition de doigt est en couplage optique avec la surface d'acquisition de la première face principale de la lame optique, et une partie de la face de ladite plaque comportant la surface d'apposition de doigt est en regard de la surface d'acquisition et constitue la surface d'apposition de doigt.

Avantageusement, la surface d'apposition de la plaque et la surface de la plaque en couplage optique avec la lame optique ainsi que la surface d'acquisition de la lame optique sont sensiblement parallèles entre elles, ce qui permet une simplification de la conception optique et une fabrication aisée, notamment un collage facilité. Par sensiblement parallèle, il est par exemple fait référence à une tolérance de parallélisme jusqu'à 0,05 mm au plan.

Avantageusement, la lame optique est en résine synthétique, telle que le poly méthyl méthacrylate (PMMA), en copolymère ou en polycarbonate, les deux derniers matériaux présentant des indices optiques différents permettent notamment d'adapter l'angle de réflexion totale en fonction de la taille d'image recherchée.

Avantageusement, la plaque est en verre, ce qui permet de disposer d'une surface résistante, dure, au contact des doigts des utilisateurs, tout en garantissant une tenue robuste et durable d'électrodes conductrices transparentes réalisées par exemple par un dépôt d'oxyde d'étain et d'indium .

Avantageusement, les moyens d'imagerie, situés en aval de la plaque optique, sont dimensionnellement dans les limites de l'épaisseur de la lame optique, ce qui permet de limiter l'épaisseur totale du dispositif.

Avantageusement, le dispositif comporte une unité de traitement, la nappe de connexion et le capteur étant reliés à l'unité de traitement, ce qui permet de traiter les mesures d'impédance et de détecter les fraudes, notamment par apposition de faux-doigt, localement.

Avantageusement, le capteur est intégré à l'unité de traitement laquelle est disposée sous le dispositif, ce qui renforce la compacité du dispositif.

Avantageusement , la nappe de connexion est connectée aux électrodes conductrices transparentes.

Avantageusement, l'unité de traitement est située sous la lame optique, ce qui renforce la compacité du dispositif.

Avantageusement, le décroché est constitué par une marche verticale, ce qui facilite la fabrication du dispositif et permet par exemple, de disposer un élément absorbant afin d'absorber un fluage de colle lors du collage de la plaque sur la lame optique.

Selon un mode de réalisation, la source lumineuse et la lame optique étant mutuellement agencés de manière telle que le faisceau lumineux, émis par la source lumineuse puis parvenant sur le doigt apposé en regard de la surface d'acquisition de la première face principale afin d'éclairer ledit doigt, se propage ensuite, après réflexion et diffusion par le doigt, à l'intérieur de la lame optique avec réflexions multiples alternativement sur les première et seconde faces principales de celui-ci pour parvenir jusqu'à la seconde extrémité de la lame optique, ce qui contribue à la compacité du dispositif par repliement du chemin optique.

Avantageusement, première et deuxième partie de la première face principale et la seconde face principale opposée de la lame optique, ainsi que la face de la plaque au contact de la lame optique sont sensiblement parallèles entre elles, ce qui simplifie la conception optique .

Selon un mode de réalisation, ladite lame optique possède, à sa seconde extrémité, une face de sortie inclinée, de manière à être frappée sensiblement perpendiculairement par le faisceau lumineux , cette face en biseau, taillée obliquement, permet au faisceau de ne pas subir de réflexion importante .

Par la suite on désignera comme axe optique du moyen d'imagerie l'axe de l'objectif focaliseur. Selon un mode de réalisation, la face de sortie est orientée telle qu'elle forme une excroissance en pointe, la première face principale et la seconde face principale opposée de la lame optique formant chacune une base comportant au moins six côtés. Cette construction de la lame optique avec une excroissance en pointe de la face latérale arrière implique notamment que ladite face n'est plus intégralement dans un plan parallèle à la face latérale avant, ni même intégralement dans un plan orienté selon l'axe transversal (y) de la surface d'apposition. Cette construction permet de rallonger le chemin optique dans un minimum d'espace disponible et de disposer la face de sortie en biais au plus près du premier miroir, tout en gardant de l'espace pour disposer les moyens d'imagerie, avec notamment la superficie de la première face principale inférieure à la superficie de surface de la seconde face principale, de par la nature inclinée de la face de sortie.

Avantageusement, la pointe est formée par un angle obtus entre l'arête (supérieure) délimitant la face de sortie et la première face principale et l'arête délimitant la première face principale et une face latérale de la lame optique et respectivement entre l'arête (inférieure) délimitant la face de sortie et la deuxième face principale et l'arête délimitant la deuxième face principale et ladite face latérale de la lame optique.

Avantageusement, l'angle obtus est supérieur à 100° et inférieur à 130°, par exemple égal à 107°, de manière à orienter le faisceau sortant de la lame optique vers un coin du dispositif pour allonger le chemin optique en restant compact.

Selon un mode de réalisation, l'objectif focaliseur possède une surface d'entrée et une surface opposée de sortie de manière à former une lentille convergente , l'objectif focaliseur est situé en aval de la lame optique, il est disposé en aval et en regard du premier miroir, notamment avec un axe optique de l'objectif focaliseur s'étendant presque parallèlement à une arête délimitant la face de sortie et la première face principale. Cela permet de favoriser la compacité et notamment de régler l'espace entre l'objectif focaliseur et les deux miroirs pour permettre, par construction, la focalisation sur le capteur qui est, placé au plus près possible du second miroir, renforçant l'efficacité de la lentille convergente de l'objectif focaliseur, intervenant dans le facteur de grandissement entre le doigt et son image.

Avantageusement, le premier miroir a une double inclinaison, à la fois par rapport à la normale à la face de sortie et par rapport à l'axe optique de l'objectif focaliseur, le premier miroir étant disposé en regard de la face de sortie et en regard de la surface d'entrée dudit objectif focaliseur et ayant une orientation telle qu'il reçoit une partie du faisceau lumineux issu de ladite face de sortie et la réfléchit en direction de ladite surface d'entrée de l'objectif focaliseur selon l'axe de celui-ci, ce qui permet de replier le chemin optique dans un espace réduit.

Selon un mode de réalisation, ladite face de sortie comporte une lentille de surface sphérique ou asphérique, ce qui permet de limiter la divergence des faisceaux tout en intégrant ladite lentille à la face de sortie de manière à optimiser la compacité du dispositif et limiter le nombre de faces spécifiques de la lame optique en combinant par exemple sur la même face de sortie la taille en biseau ainsi que ladite lentille. De plus, la combinaison desdites surfaces d'entrée et sortie de l'objectif focaliseur formant lentille convergente ainsi que cette lentille de la face de sortie de lame optique déterminent un facteur de grandissement entre le doigt et son image. De même, avantageusement, la position du premier miroir est configurée de manière à ce que la distance entre l'objectif focaliseur et la face de sortie soit telle que la lentille de ladite face de sortie soit la plus grande possible tout en restant contenue dans ladite face de sortie.

Selon un mode de réalisation, la plaque forme un prisme à base rectangulaire, notamment un parallélépipède plat, comportant deux faces principales opposées dont une première ,(dite inférieure) est en couplage optique avec la surface d'acquisition de la première face principale de la lame optique, et une deuxième (dite supérieure) dont une partie est en regard de la surface d'acquisition et constitue la surface d'apposition de doigt, ce qui permet de simplifier la conception optique du dispositif et de disposer d'une surface d'apposition, externe et accessible à l'utilisateur, supérieure à la surface d'acquisition en regard.

Selon un mode de réalisation, le dispositif comprend un capot externe comportant une ouverture délimitant la surface d'apposition, une jonction entre la surface d'apposition et le capot étant réalisée par un cordon d'étanchéité, ce qui permet de protéger l'intérieur du dispositif, dont notamment les moyens d'imagerie, par un capot dont une ouverture de la taille de la surface d'apposition permettra à l'utilisateur d'y apposer son doigt sans risque de contaminer le reste du dispositif par des poussières par exemple.

Avantageusement, les faces principales de la plaque sont chacune de surface supérieure à la surface d'acquisition et notamment inférieure à la surface de la première face principale de la lame optique.

Selon un mode de réalisation, la surface d'apposition est de superficie supérieure ou égale à 15,24 mm par 20,32 mm (FAP20) ,ce qui répond aux exigences des professionnels tout en étant de conception compacte et permettant ensuite monter le dispositif , en tant que module, dans de nombreux système biométriques. Par exemple, la surface d'apposition peut être de 16,7 mm par 21mm.

Avantageusement, la surface d'acquisition est de superficie inférieure à la superficie de la surface d'apposition, notamment de surface inférieure ou égale à FAP20.

Selon un mode de réalisation, les électrodes conductrices transparentes sont réalisées par un dépôt transparent conducteur, métallique ou d'oxyde, tel qu'un dépôt métallique d'argent, notamment en nanostructure ou sous forme de grilles, ou tel qu'un dépôt d'oxyde transparent conducteur, notamment choisi parmi les oxydes métalliques tels que les oxydes d'argent ou parmi les oxydes d'indium et d'étain (ITO), les oxydes de zinc et d'aluminium (AZO), les oxydes d'étain et d'antimoine (ATO), les oxydes d'indium et de zinc (IZO) , ce qui permet d'approvisionner ces plaques avec dépôt en amont du reste de la fabrication, notamment sous forme de grands panneaux prêts à découper en vue de la fabrication du dispositif.

Selon un mode de réalisation, ladite première partie de la première face principale est surélevée par rapport à la deuxième partie de ladite première face principale de la lame optique d'au moins 0,30 mm, préférentiellement entre 0,45 mm et 0,65 mm, ce qui permet de créer une lame d'air évitant de coupler la plaque ou la nappe avec la lame optique.

Selon un mode de réalisation, la plaque s'étend longitudinalement en saillie par rapport à la surface d'acquisition, en dépassant d'une distance d supérieure ou égale à 2 mm au-delà du décroché en direction de la seconde extrémité, notamment entre 3 et 5 mm , ce qui permet de disposer d'espace pour la nappe de connexion et le joint d'étanchéité tout en augmentant la surface d'apposition par rapport à la surface d'acquisition .

Selon un mode de réalisation, la plaque est collée à la lame optique, ce qui permet une fabrication aisée en disposant notamment la colle sur la surface de la première partie de la première face principale de la lame optique et sur la surface de la plaque en regard.

Selon un mode de réalisation, le collage est réalisé au moyen d'une colle optique transparente et flexible, ce qui permet d'absorber la différence de dilatation entre la lame optique et la plaque. En outre, la colle optique est notamment résistante aux ultrasons, ce qui permet d'ultra-sonner le capot plastique pour en garantir l'étanchéité.

Selon un mode de réalisation, le dispositif a une épaisseur inférieure ou égale à 15 mm, ce qui permet de proposer un dispositif compact.

Avantageusement, pour obtenir une image de qualité bien contrastée, le dispositif optique d'acquisition comporte un diaphragme situé en amont et à proximité de l'objectif focaliseur.

Avantageusement, le dispositif comporte en outre un second miroir disposé en regard de la surface de sortie dudit objectif focaliseur et orienté de manière telle que le faisceau lumineux issu de l'objectif focaliseur soit réfléchi transversalement à la lame optique, ce qui permet d'améliorer encore la compacité en repliant le chemin optique notamment pour disposer un capteur sur le même circuit imprimé que la source lumineuse .

Avantageusement, le second miroir est orienté de manière que le faisceau lumineux soit réfléchi dans une direction opposée à la surface d'apposition du doigt, ce qui permet de replier le chemin optique, et notamment de disposer objectif focaliseur et capteur dans un espace restreint, optimisant la compacité.

Avantageusement , le second miroir appartient à une seconde pièce en saillie rapportée sur la face de sortie de la seconde extrémité de la lame optique, de manière à s'étendre dans le prolongement de ladite lame optique.

Avantageusement, le premier miroir appartient à une première pièce en saillie rapportée sur la face de sortie de la seconde extrémité de la lame optique, de manière à s'étendre dans le prolongement de la lame optique.

Avantageusement, la source lumineuse est disposée sous la deuxième face principale de la lame optique , sensiblement en regard de la surface d'acquisition de la première face principale de la lame optique et dirigée vers celle-ci, ce qui permet de travailler sur fond noir (dark field), plutôt qu'en surface éclairée uniforme (bright field).

Avantageusement, la source lumineuse est de longueur d'onde supérieure à 600 nm, ce qui permet de bénéficier de la diffusion naturelle du doigt.

Avantageusement, la source lumineuse est non ponctuelle, ce qui permet d'améliorer l'uniformité de l'éclairage, par exemple avec une surface d'éclairage sensiblement égale à la surface d'apposition.

Avantageusement, la source lumineuse est une matrice de diodes électroluminescentes, avec un diffuseur interposé entre ladite matrice et la deuxième face principale de la lame optique, ce qui permet de disposer d'une source lumineuse de grande surface mais de faible épaisseur, robuste et de fabrication aisée.

### Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
[fig.1] la figure 1 illustre une vue en coupe longitudinale d'un dispositif optique d'acquisition
   agencé conformément à un mode de réalisation possible de l'invention,
[fig.2] la figure 2 expose une vue de dessus du dispositif de la figure 1 ;
[fig.3] la figure 3 illustre une vue de dessus du dispositif de la figure 1 avec une représentation de la zone d'acquisition
[fig.4] la figure 4 est une vue en perspective du dispositif de la figure 1 ;
[fig.5] la figure 5 est une vue en perspective du dispositif de la figure 1 avec une représentation de la zone d'acquisition ;
[fig.6] la figure 6 est une vue de sortie de l'extrémité arrière du dispositif de la figure 1 ; et
[fig.7] la figure 7 est un exemple de schéma d'une unité de traitement pour la mise en œuvre d'un ou plusieurs modes de réalisation de l'invention.

Des références identiques seront utilisées d'une figure à l'autre pour désigner des éléments identiques ou similaires, dans leur forme ou dans leur fonction.

### Description détaillée

L'invention peut s'appliquer dans différents contextes d'enrôlement ou d'authentification en vue d'un accès au moyen d'un terminal d'acquisition par contact d'empreinte digitale.

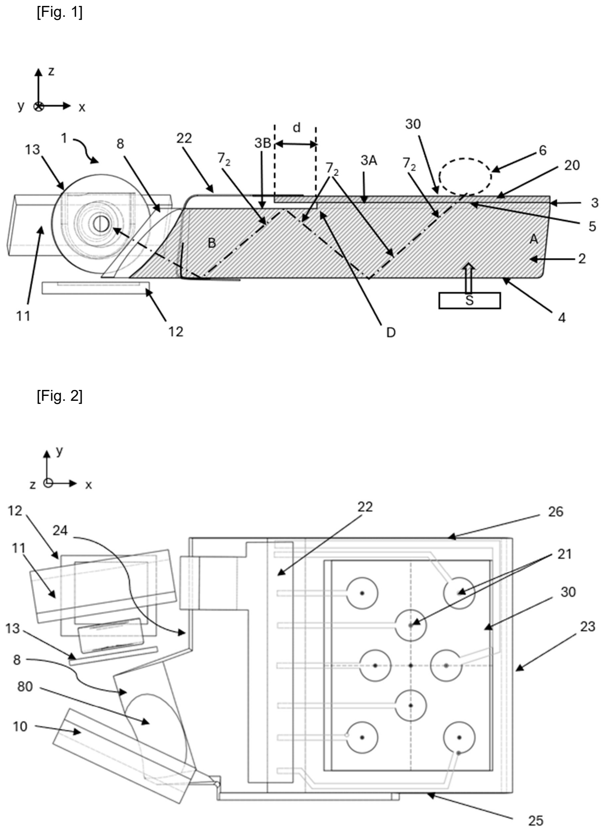

On se référera tout d'abord à l'ensemble des figures 1 à 6 pour décrire un mode de réalisation préféré d'un dispositif optique d'acquisition d'empreinte digitale.

Les axes x et y sont dans ces figures définis relativement à la surface d'apposition 30 du doigt qui est un rectangle définissant les deux axes latéral x et transversal y.

Le dispositif optique d'acquisition d'empreinte digitale conforme à l'invention, désigné dans son ensemble par la référence 1, comprend principalement :
- une lame optique 2 ;
- une source S lumineuse ;
- des moyens d'imagerie comprenant :
   - un capteur 12 ;
   - un objectif focaliseur 9 ;
   - un premier miroir 10 ;
- une plaque 20 transparente munie d'au moins deux électrodes 21 conductrices transparentes ;
- nappe 22 de connexion.

Ce dispositif 1, imageur, ne comprend donc qu'un très faible nombre de composants, ce qui rend sa fabrication aisée et peu coûteuse.

Il peut également comprendre une unité 106 de traitement .

Avantageusement, le dispositif 1 comporte un capot (non représenté) externe de manière à protéger les composants internes, le capot comportant un orifice de la taille de la surface 5 d'acquisition de manière à ce que le doigt 6 puisse être apposé sur la surface 30 d'apposition du doigt. L'épaisseur hors tout du dispositif 1 est avantageusement inférieure à 15 mm, notamment elle de 13,65 mm dans le mode de réalisation illustré (en incluant capot et unité de traitement 106). Par exemple, l'épaisseur du dispositif tel que représenté en figure 1, est d'environ 7 mm.

La lame optique 2 est une lame à faces parallèles, elle se comporte comme un milieu transparent homogène, limité par deux faces planes parallèles. La lame optique 2 ne dévie donc pas les rayons lumineux qui la traversent.

La lame optique 2 est par exemple en résine synthétique, telle que le poly méthyl méthacrylate (PMMA), en copolymère ou encore en polycarbonate. Dans le mode de réalisation illustré la lame optique est en PMMA, ce qui permet un moulage homogène, le matériau permettant une injection aisée et présentant un comportement stable dans le temps. La lame optique 2 possède une première face principale 3, dite aussi supérieure, et une seconde face principale 4, dite inférieure, opposée à la précédente. Les autres faces sont appelées latérales, dont une face avant 23, notamment constituée par une surface plane, en particulier sensiblement verticale (dans le plan yz) , du côté de la première extrémité A et une face arrière 24 (côté moyens d'imagerie), avantageusement découpée (tel que décrit plus loin), du côté de la seconde extrémité B, ainsi qu'une face gauche 25 et une face droite 26.

L'épaisseur de la lame optique 2 est non uniforme et forme un décroché D entre la première partie 3A et la deuxième partie 3B de la première face principale 3. La première partie 3A de ladite première face principale 3 située au voisinage d'une première extrémité A (à droite sur la figure 1) de la lame optique comporte une surface d'acquisition 5 pour imager le doigt 6.

Dans le mode de réalisation illustré, par construction, non limitativement, la surface d'acquisition 5, dans la première partie 3A, surélevée, de la face principale 3, est de dimensions sensiblement inférieure à la surface d'apposition 30.

Dans le mode de réalisation illustré, le décroché D est constitué par une marche verticale, d'autres variantes étant possibles telles qu'un plan incliné. Le choix d'un décroché D sous forme de marche trouve un avantage lors d'une fabrication du dispositif comportant une étape de collage de la plaque 20 sur la lame optique 2 car cela permet notamment d'y disposer temporairement un élément absorbant en vue d'absorber un éventuel surplus de colle lors du collage

Ce décroché D permet de ne pas gêner le repliement du chemin optique dans la lame optique 2 en créant une partie de la surface inférieure de la plaque 20 qui ne couple pas avec la lame optique 2, grâce à la lame d'air créée entre la lame optique 2 et la plaque 20 par le décroché D, et donc ne perturbe pas les réflexions dans la lame optique 2. Ainsi, le décroché D permet de limiter la distance en x entre la surface d'acquisition 5 et la première zone de réflexion sur le dessus de la lame optique 2.

Les deux faces 3 et 4 sont avantageusement - pour simplifier la conception du dispositif à la fois sur le plan mécanique et notamment sur le plan optique - parallèles l'une à l'autre comme illustré sur l'ensemble des figures entre la première face 3 - hors décroché D- et la seconde face 4. De même, la première 3A et la deuxième 3B partie de la première face principale 3 de la lame optique 2 sont parallèles entre elles.

Dans le mode de réalisation illustré, l'épaisseur de la lame optique 2 entre les deux faces principales est supérieure à la première extrémité A par rapport à la seconde extrémité B, l'épaisseur de la lame optique 2 entre ladite première partie 3A de ladite première face principale 3 et la seconde face principale 4 étant supérieure à l'épaisseur entre ladite deuxième partie 3B de ladite première face principale 3 et la seconde face principale 4, de manière que la surface d'acquisition 5 soit surélevée par rapport à la deuxième partie de ladite première face principale 3 et permette la création d'une lame d'air entre la plaque mince 20 et la lame optique 2. Dans ce mode de réalisation, la première partie 3A surélevée s'étend longitudinalement jusqu'à la première extrémité A, et s'étend transversalement autant que la lame optique 2, ce qui permet une conception simple, néanmoins une plaque de dimension moindre aurait pu être envisagée.

Le fait de canaliser le faisceau lumineux dans la lame optique 2, avec réflexions multiples sur les faces principales 3, 4 opposées de la lame optique 2, permet, pour une longueur donnée du trajet optique, de rapprocher l'une de l'autre les deux extrémités du trajet optique, et donc de réaliser un dispositif plus court et moins encombrant. Le fait que les deux faces principales 3, 4 soient mutuellement parallèles simplifie la conception optique et la fabrication de la lame optique 2. La partie 5 correspondant à la surface d'acquisition de la lame optique 2 est surélevée par rapport à la deuxième partie 3B de la première face principale 3 d'au moins 0,30 mm, préférentiellement entre 0,45 mm et 0,65 mm. Cette surélévation ainsi que l'épaisseur de la plaque 20 permettent d'augmenter la taille de l'image acquise par rallongement du chemin optique comparativement à une lame optique de 6 mm seule, et notamment d'obtenir une image FAP20, tout en restant compact. La différence d'épaisseur dépend du chemin optique, notamment de l'épaisseur de la lame optique 2 et du nombre de rebonds du faisceau, ainsi que des matériaux de la plaque 20 et de la lame optique 2, tout en restant dans un encombrement limité. Avantageusement, la lame optique 2 a une épaisseur, entre la deuxième partie 3B de la première face principale 3 et la seconde surface principale opposée 4, supérieure ou égale à 5,90 mm, préférentiellement de 6 mm, en fonction des indices de matière. Non limitativement, dans le mode de réalisation illustré, ladite épaisseur est de 6 mm, les surfaces 30, 5 et faces 3, 3A, 3B et 4 sont parallèles, sachant que la tolérance de parallélisme est de 0,05 mm au plan, la partie 5 correspondant à la surface d'acquisition de la lame optique 2 est surélevée par rapport à la deuxième partie 3B de la première face principale 3 de 0,55 mm, et l'épaisseur de la plaque 20 est de 0,55 mm.

La lame optique 2 comporte, à sa seconde extrémité B, sous forme de tout ou partie (tel que représenté ici) de la face arrière 24 une face de sortie 8 biseautée, préférentiellement en plan incliné de manière à être frappée sensiblement perpendiculairement par le faisceau lumineux 7₂ afin que celui-ci sorte de la lame optique 2 par ladite face inclinée 8 sans subir de réfraction importante. En effet, à incidence normale, l'angle d'incidence est nul ainsi que l'angle de réfraction, si bien que la direction de propagation n'est pas modifiée et le chemin optique n'est pas dévié à la traversée de la face de sortie 8. La face de sortie 8 de la lame optique 2 est donc notamment non verticale mais inclinée, formant une pente.

Avantageusement, la face de sortie 8 inclinée, comporte une lentille 80 de surface sphérique, tel que représentée, ou asphérique, de manière à exploiter la réfraction et améliorer la qualité image, en créant un dioptre supplémentaire en plus des deux faces 9₁, 9₂ de la lentille convergente de l'objectif focaliseur 9.

Préférentiellement, mais non limitativement, la lentille 80 est une lentille sphérique intégrée à la lame optique 2, ce qui permet de la disposer au plus près de la face de sortie 8 de la lame optique 2 et limite le nombre de composants pour un gain de compacité. Dans le mode de réalisation illustré la face de sortie 8 de la lame optique 2 comporte une lentille 80 sphérique, cette lentille 80 est ainsi directement intégrée à la lame optique 2. Préférentiellement, en combinaison avec la nature inclinée de la face de sortie 8 comportant la lentille 80, la face arrière 24 est découpée, en ce qu'elle ne forme pas une surface intégralement plane mais discontinue, pour augmenter encore la compacité du dispositif 1. La face de sortie 8 constitue donc une partie de la face arrière 24. En effet, la face arrière 24 présente une excroissance et une forme en pointe pour positionner la lentille 80 le plus loin possible de l'objectif focaliseur 9, ie. au plus tôt dans le chemin optique, de manière à maximiser l'efficacité de la lentille 80 . En particulier, dans le mode de réalisation illustré, la seconde extrémité B comporte une excroissance en ce que les arêtes supérieures et inférieures de la face arrière 24 de la lame optique 2 forment une pointe, la forme de la lame optique 2 se rapprochant alors d'une lame optique à base comportant au moins six côtés. Ainsi, l'excroissance en pointe supportant la surface 8 biseautée lui donne sa forme en biais. Sur les figures du mode de réalisation illustré, non limitatif, on constate donc que les arêtes supérieure et inférieure de la face de sortie 8 ne sont pas parallèles à l'axe y,, c'est-à-dire que lesdites arêtes ne sont pas parallèles à l'axe y, mais forment un angle β obtus dans le plan xy avec respectivement l' arête supérieure et l'arête inférieure de la face latérale gauche 25, ladite face de sortie 8 délimitant l'excroissance de la lame optique 2. Dans le mode de réalisation illustré, la face de sortie est inclinée de manière à ce que le faisceau lumineux sorte de la lame optique 2 par ladite face de sortie 8 inclinée sans subir de réflexion importante et l' angle β, ici de 107 degrés par exemple, permet de disposer la lentille 80 au plus tôt du chemin optique, et de faire sortir les rayons non plus au milieu de la face de sortie 8 de la lame optique 2, mais sur le côté, de manière à allonger le chemin optique et disposer de plus de place pour les miroirs et la lentille, tout en optimisant la compacité.

La source S lumineuse est configurée pour fournir un faisceau lumineux dirigé vers le doigt 6, une partie du faisceau étant diffusée ou réfléchie par le doigt 6.

La source S lumineuse et la lame optique 2 sont mutuellement agencés de manière telle que le faisceau lumineux, émis par la source lumineuse S puis parvenant sur le doigt 6 apposé sur la surface d'apposition 30 du doigt, afin d'éclairer ledit doigt 6, se propage 7₂ ensuite , ie. après réflexion et diffusion par le doigt 6, à l'intérieur de la lame optique 2 avec réflexions multiples alternativement sur les première 3 et seconde 4 faces principales de celui-ci pour parvenir jusqu'à la seconde extrémité B de la lame optique 2 opposée à la première extrémité A.

Notamment, au moins une source S lumineuse est située en regard d'une face de la lame optique 2, au voisinage de la première extrémité A de celui-ci, pour éclairer le doigt 6 à travers la lame optique 2.

Dans le mode de réalisation illustré, l'éclairage du doigt 6 est obtenu en disposant une source S lumineuse non ponctuelle, ayant une surface significative par rapport à la surface 30 d'apposition, sous la face inférieure 4 de la lame optique 2, en regard de ladite surface 5 d'acquisition et dirigée vers celle-ci. Avantageusement, la surface d'éclairage est proche de la surface 30 d'apposition du doigt. En pratique, cette source S lumineuse peut avantageusement être une matrice de diodes électroluminescentes, avec notamment un diffuseur (par exemple sous forme d' un dépoli) interposé entre celle-ci et la face inférieure 4 de la lame optique 2 ou formé sur ladite lame optique 2. En variantes non limitatives, la source S d'éclairage pourrait comporter plusieurs sources ponctuelles orientées vers la surface d'acquisition 5, ou encore pourrait comporter une combinaison d'un guide lumières avec des leds latérales procurant une configuration de type éclairage indirect, notamment avec des surfaces latérales incurvées ou inclinées.

La source S d'éclairage peut faire partie du dispositif 1 ou d'un terminal sur lequel le dispositif 1 est monté.

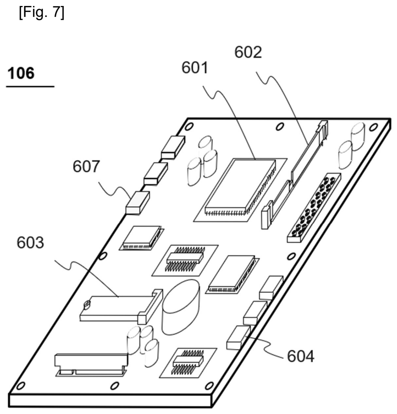

L'unité 106 de traitement peut consister uniquement en une carte électronique telle que représentée figure 7. L'unité de traitement 106 est avantageusement située sous la lame optique 2, ce qui permet de disposer sur une même carte électronique de l'unité 106 la source lumineuse S, le capteur 12 et une unité centrale de traitement mettant notamment en œuvre un algorithme de détection de fraude par analyse de l'impédance mesurée au moyen des électrodes 21 conductrices transparentes de la plaque 20 liée à la nappe 22 de connexion, la nappe de connexion étant reliée à l'unité de traitement 106, notamment par connexion de la nappe 22 aux électrodes 21 conductrices. Un connecteur (non représenté) est par exemple sous la lame optique 2. La nappe 22 peut être avantageusement en matériau conducteur transparent recouvert d'un isolant transparent, par exemple une carte de circuit imprimé flexible transparente.

L'unité 106 de traitement peut faire partie du dispositif 1 ou d'un terminal sur lequel le dispositif 1 est monté et auquel il est électroniquement connecté.

Les moyens d'imagerie représentés comprennent :
- un capteur 12;
- un objectif focaliseur 9 ;
- un premier miroir 10 ;
et sont situés après la seconde extrémité B de la lame optique 2. Ils sont situés en aval de la lame optique 2 (le chemin optique suivant la lumière c'est-à-dire allant du doigt 6 vers le capteur 12).

L'objectif focaliseur 9 est situé en aval de la lame optique 2.

Le premier miroir 10 est notamment disposé en regard de la surface d'entrée 9₁ dudit objectif focaliseur 9 et ayant une orientation telle qu'il reçoit une partie du faisceau lumineux issu de ladite face de sortie 8 en seconde extrémité B de la lame optique 2 et la réfléchit 7₃ en direction de ladite surface d'entrée 9₁ de l'objectif focaliseur 9 selon l'axe de celui-ci. L'axe optique se propageant suivant l'axe 7₂ de la lame optique 2, il entre orthogonalement à la face 8 de sortie. Sur les figures sont représentés confondus le chemin optique 7₃ et l'axe optique du moyen d'imagerie.

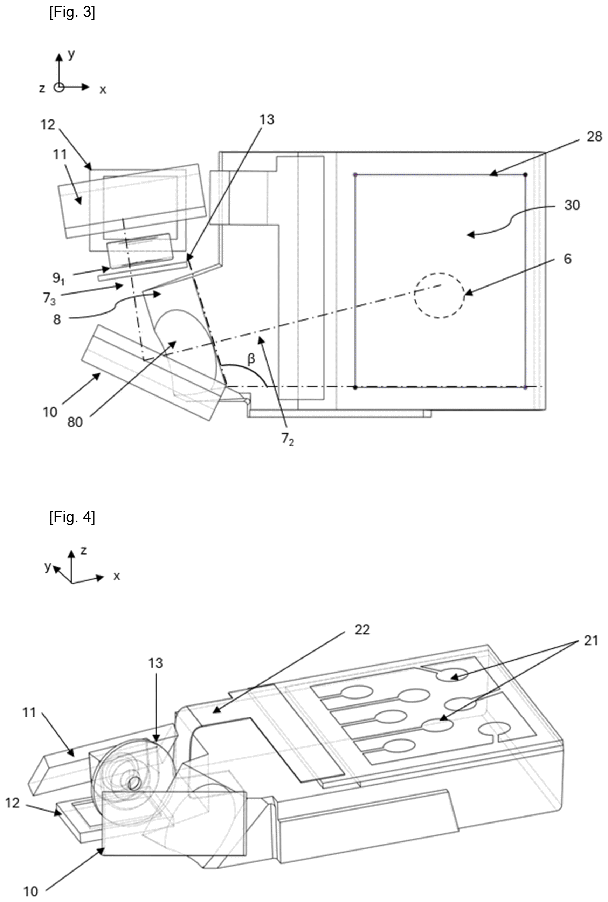

Vu du dessus, comme en figure 3, les chemins optiques ne sont pas dans le plan de la figure, le chemin optique 7₂ en entrée du premier miroir 10 forme un angle inférieur à 90° avec l'axe optique des moyens d'imagerie, c'est-à-dire à l'axe 7₃ de l'objectif focaliseur 9, de manière à replier le chemin optique dans un encombrement minimal, pour une compacité optimisée. De même, l' axe optique 7₃ de l'objectif focaliseur s'étend presque parallèlement à l' arête délimitant la jonction entre la face de sortie 8 et la première face principale 3.

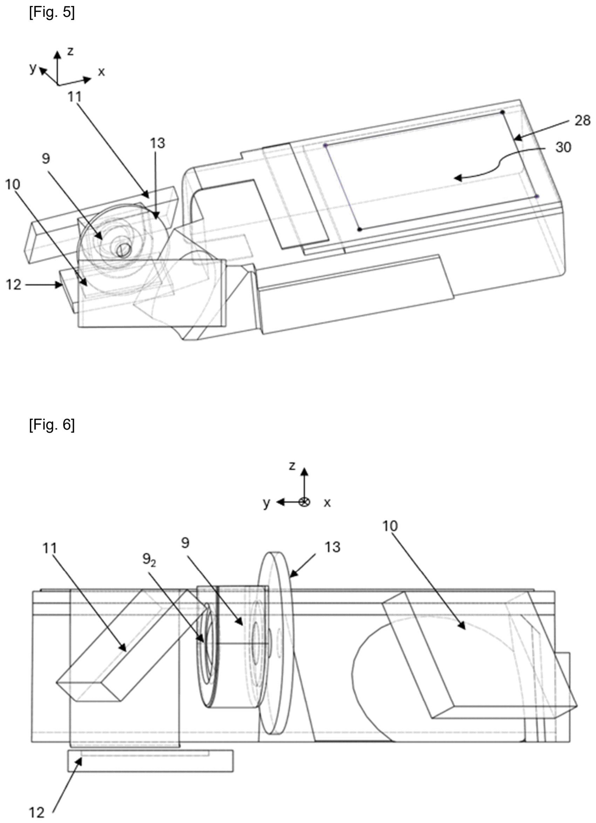

Pour que le dispositif 1 soit le moins épais possible, il est intéressant, comme on le voit mieux en figures 3 et 6, que l'objectif focaliseur 9 s'inscrive dans les limites dimensionnelles définies entre les deux faces principales 3, 4 de la lame optique 2, avec un axe optique 7₃ par exemple dans le plan xy. Il convient alors que le faisceau ayant traversé la face de sortie inclinée 8 de la lame optique 2 soit réfléchi par le miroir 10 selon l'axe (confondu avec 7₃) de l'objectif focaliseur 9. Le miroir 10 dévie le chemin optique 7₂ en 7₃, ce qui définit sa double inclinaison, à la fois par rapport à la normale à la face 8 et par rapport à l'axe 7₃ de l'objectif focaliseur 9, le miroir 10 étant normal à la bissectrice de l'angle formé par 7₂ et 7₃. Sur la figure 3, on a représenté en 7₂ le trajet du faisceau dans la lame optique 2, puis en 7₃ après réflexion sur le miroir 10 et à travers l'objectif focaliseur 9.

L'objectif focaliseur 9 (par exemple sous forme d'une lentille convergente épaisse) présente une surface d'entrée 9₁ recueillant le faisceau lumineux ayant traversé la face de sortie 8 de la lame optique 2 et une surface de sortie 9₂ de laquelle sort le faisceau focalisé ; les surfaces d'entrée 9₁ et de sortie 9₂ , ici toutes deux convexes, de l'objectif focaliseur 9 ainsi ici que la puissance de la lentille 80 déterminent un facteur de grandissement entre le doigt 6 et son image.

Avantageusement, l'objectif focaliseur 9 est fixé à la lame optique 2, à l'extrémité B de celui-ci, par l'intermédiaire de moyens de support (non représentés).

Dans un mode de réalisation, non représenté ici, l'objectif focaliseur 9 peut être déplacé axialement le long de son axe optique (confondu avec 7₃ ), de manière à permettre un réglage de position du plan focal image par rapport au capteur 12 , ce qui présente un avantage quand un réglage de focalisation est nécessaire.

Le diaphragme 13, situé en amont et à proximité de l'objectif focaliseur 9, permet de limiter l'influence des lumières parasites et obtenir une image de meilleure qualité.

Le faisceau focalisé issu de l'objectif focaliseur 9 parvient alors sur le capteur 12 propre à détecter l'image des empreintes digitales, ce capteur étant situé au foyer image de l'objectif focaliseur. En particulier, sur les figures le capteur n'est pas représenté, car pour augmenter encore la compacité du dispositif 1, le capteur 12 n'est pas ici situé sur l'axe optique de l'objectif focaliseur 9, mais sous le dispositif 1, le capteur est par exemple intégré dans l' unité de traitement 106 surmontée par le dispositif 1. A cette fin, un second miroir 11 (mode de réalisation représenté) est disposé en regard de la surface de sortie 9₂ de l'objectif focaliseur 9 et orienté de manière telle que le faisceau lumineux issu de l'objectif focaliseur 9 soit réfléchi transversalement à la lame optique 2, par exemple en inclinant le second miroir 11 pour réfléchir le faisceau 7₃ transversalement à la lame optique 2 de manière à ce que le faisceau atteigne ensuite le capteur en respectant l'angle de Scheimpflug. Dans un cas avec le capteur situé sous le dispositif 1, à la verticale de la surface 5 d'acquisition, et en particulier si la surface du capteur est parallèle à la surface 5 d'acquisition sous le dispositif 1, le second miroir 11 est orienté de manière que le faisceau lumineux soit réfléchi vers le capteur 12.

Grâce à ces dispositions on constitue un dispositif optique d'acquisition 1 particulièrement compact avec le faisceau focalisé dirigé à l'opposé de la surface d'apposition 30 du doigt 6.

Avantageusement, le premier miroir 10 et/ou le second miroir 11 peuvent être formés sur des pièces de support (non représentées ) qui sont rapportées sur la face de sortie inclinée 8 de la lame optique 2 à partir de laquelle elles s'étendent en saillie dans le prolongement de la lame optique 2. Ainsi, le premier miroir 10 et/ou le second miroir 11 peuvent chacun appartenir à une pièce en saillie rapportée sur la face de sortie 8 en seconde extrémité B de la lame optique 2, de manière à s'étendre dans le prolongement de la lame optique 2.

D'après les explications qui précèdent, on comprend que les pièces en saillie incorporant respectivement les miroirs 10 et 11, ainsi que les moyens de support de l'objectif focaliseur 9 peuvent être réalisées de manière à constituer un dispositif 1 très compact et surtout présentant une très faible épaisseur qui peut ne pas excéder 15 mm, répondant ainsi aux exigences de la pratique.

La plaque 20 transparente est par exemple en plastique ou en verre. Dans le mode de réalisation illustré, la plaque est en verre, elle est disposée au-dessus de la surface d'acquisition 5, la plaque 20 étant liée à une nappe 22 de connexion, notamment par connexion de la nappe 22 aux électrodes 21 conductrices. La plaque 20 est à faces principales supérieure et inférieure parallèles, telle qu'un parallélépipède plat. Non limitativement, la plaque 20 forme un prisme à base rectangulaire. Les faces principales de la plaque 20 sont de superficie supérieure à la superficie de la surface d'acquisition 5, et notamment, non limitativement, de superficie supérieure à la surface de la première partie 3A de la première face principale 3 de la lame optique 2. La plaque 20 présente une surface supérieure de dimensions en y inférieure à 25 mm et en x inférieure à 30 mm. Dans le mode de réalisation représenté, les dimensions de la plaque 20 sont de 23,6 mm (y) par 24,6 mm (x).

La surface supérieure de la plaque 20 en regard de la surface d'acquisition 5 est plane et constitue une surface d'appui pour le doigt 6 appelée surface 30 d'apposition du doigt 6. La structure de ce dispositif selon ce mode de réalisation permet de bénéficier d'une surface 30 d'apposition du doigt, par construction (surélevée, en amont du chemin optique), de superficie supérieure à la surface d'acquisition 5, ce qui permet notamment d' exploiter une surface imagée d'apposition du doigt augmentée par rapport à une surface d'acquisition inférieure de la lame optique plate seule, qui n'aurait par exemple pas pu être FAP20. Néanmoins l'invention peut aussi être mise en œuvre à partir d'une lame optique existante de surface d'acquisition initiale supérieure à FAP20 qui serait amincie, avec par exemple une surface d'acquisition qui deviendrait moindre mais toujours supérieure à FAP20.

La périphérie de la surface d'apposition 30 de la plaque 20 est notamment délimitée par un cordon d'étanchéité 28. En effet, la surface supérieure de la plaque 20 comportant les électrodes conductrices constitue la surface externe du dispositif 1, le doigt 6 de l'utilisateur est donc appuyé contre cette dernière. Le cordon d'étanchéité 28 est par exemple en silicone, il entoure notamment le contour de la surface 30 d'apposition pour éviter par exemple l'intrusion de poussière et/ou de fluide à l'intérieur du le capot.

La plaque 20 en verre s'étend longitudinalement en saillie par rapport à la surface d'acquisition 5, en dépassant d'une distance d d'au moins 2 mm, préférentiellement entre 3 et 5mm, au-delà du décroché D en direction de la seconde extrémité B. Dans le mode de réalisation illustré, la distance d est de 3,6 mm.

La plaque 20 est disposée au-dessus de surface d'acquisition 5 par collage à ladite surface d'acquisition 5 de la lame optique 2. Le collage est préférentiellement réalisé au moyen d'une colle transparente d'indice proche de ceux de la lame optique 2 et/ou de la plaque 20, et notamment résistante aux ultrasons.

Les électrodes 21 conductrices transparentes sont réalisées par un dépôt transparent conducteur, métallique ou d'oxyde, tel qu'un dépôt métallique d'argent, notamment en nanostructure ou sous forme de grilles, ou tel qu'un dépôt d'oxyde transparent conducteur, notamment choisi parmi les oxydes métalliques tels que les oxydes d'argent ou parmi les oxydes d'indium et d'étain (ITO), les oxydes de zinc et d'aluminium (AZO), les oxydes d'étain et d'antimoine (ATO), les oxydes d'indium et de zinc (IZO). Elles servent à la mesure d'impédance, en vue de la détection de faux doigt. Au moins deux électrodes 21 sont nécessaires pour réaliser la mesure d'impédance. (une émettrice et une réceptrice), le nombre d'électrodes 21 pouvant être augmenté pour multiplier les points de mesure d'impédance avec au moins une électrode émettrice et plusieurs réceptrices, tel que représenté. Dans le mode de réalisation illustré, la plaque en verre 20 munie des électrodes est recouverte d'un dépôt d'oxyde d'indium et d'étain et appelée plaque ITO (de l'anglais Indium Tin Oxide).

Les électrodes sont reliées à la nappe de connexion 22 via les pistes de connexion, qui sont notamment de même matière que les électrodes, et la nappe de connexion 22 et le capteur 12 sont reliés à l'unité de traitement 106. Avantageusement, la nappe 22 est un composant rapporté sur la lame de verre par collage avec une colle anisotrope assurant le contact électrique.

La figure 7 représente un exemple de structure d'une unité 106 de traitement de l'information pour la mise en œuvre d'un ou plusieurs modes de réalisation de l'invention. L'unité 106 de traitement de l'information comprend typiquement une ou plusieurs unités centrales de traitement (CPU) 601, un module physique (NET) 604 de communication, un ou plusieurs modules physiques 607 d'entrée / sortie pour l'échanges de données avec des dispositifs externes (tel qu'un terminal biométrique, ou un ordinateur), un support 602 de stockage transitoire tel qu'une mémoire vive (RAM), un support 603 d'enregistrement non-transitoire (FLASH), et des bus de communication (non représentés) pour le transfert de données entre les composants internes du dispositif 106 de traitement de l'information.

L'unité 106 de traitement de l'information permet l'exécution d'un ou plusieurs programmes comprenant des instructions qui, lorsque le ou les modules de programme sont exécutés, conduisent l'unité 106 de traitement de l'information à mettre en œuvre un algorithme de détection de fraude par analyse de l'impédance. En outre, l'unité de traitement 106 peut contenir un programme comprenant des instructions, qui lorsqu'elles sont exécutées, conduisent l'unité 106 de traitement à mettre en œuvre un algorithme de reconnaissance d'empreinte.

Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

L'unité 106 de traitement de l'information comporte les éléments suivants, connectés entre eux via un bus de communication:
- une unité centrale de traitement (CPU) 601, tel qu'un microprocesseur ;
- une mémoire transitoire 602, pour mémoriser du code exécutable;
- une mémoire non transitoire 603 pour stocker les programmes informatiques et le cas échéant des gabarits d'empreinte;
- un module de communication 604 comportant par exemple une interface USB 604 (ou en variante une interface réseau, Ethernet par exemple), est connectée à un réseau de communication sur lequel des données numériques à traiter sont transmises ou reçues ; L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lus à partir de l'interface de réseau pour la réception sous le contrôle de l'application logicielle exécutée dans le processeur 601 ;
- un module d'entrée/sortie 607 pour la réception / l'envoi de données depuis / vers des périphériques externes tels que disque dur, support de stockage amovible ou autres.

Le capteur 12 et la source lumineuse S , par exemple sous forme de matrice de LEDs, peuvent avantageusement être disposés sur le circuit imprimé de l'unité centrale de traitement 601.

Le code exécutable peut être stocké dans la mémoire non transitoire 603, par exemple une mémoire flash ou une mémoire morte, ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif 106 de traitement de l'information, tel que la mémoire 603, avant d'être exécuté.

L'unité centrale de traitement 601 est adaptée pour commander et diriger l'exécution des instructions ou des portions de code logiciel du programme ou des programmes, instructions qui sont stockées dans l'un des moyens de stockage précités, tel que la mémoire non transitoire 603. Après la mise sous tension, le CPU 601 est capable d'exécuter des instructions de la mémoire RAM transitoire 602, relatives à une application logicielle.

Selon un mode de réalisation, l'unité traitement de l'information 106 est uniquement hébergée localement, En variante le traitement peut être distribué, l'unité de traitement 106 communiquant, avec au moins une autre unité distante, via l'interface réseau 604. De même, tout ou partie de la mémoire peut être physiquement déportée, hébergée par exemple sur un serveur distant.

## Revendications

1. Dispositif (1) optique d'acquisition d'empreinte digitale comprenant :
- une source (S) lumineuse configurée pour fournir un faisceau lumineux dirigé vers un doigt (6), une partie du faisceau étant diffusée ou réfléchie par le doigt (6),
- une lame optique (2) possédant une première (3) et une seconde (4) faces principales parallèles opposées, une première partie (3A) de ladite première face principale (3) située au voisinage d'une première extrémité (A) de la lame optique (2) comportant une surface d'acquisition (5) pour imager le doigt (6);
- des moyens d'imagerie comprenant :
- un capteur (12);
- un objectif focaliseur (9) ;
- un premier miroir (10) ;
ledit dispositif étant **caractérisé en ce que** la première face principale (3) comporte une deuxième partie (3B) située entre la première partie (3A) et une seconde extrémité (B) de la lame optique (2) opposée à la première extrémité (A), l'épaisseur de la lame optique entre les deux faces principales de la lame optique (2) n' étant pas uniforme, l'épaisseur de la lame optique (2) entre ladite première partie (3A) de la première face principale (3) et la seconde face principale (4) étant supérieure à l'épaisseur de la lame optique (2) entre la deuxième partie (3B) de la première face principale (3) et la seconde face principale (4), formant un décroché (D) entre ladite première partie (3A) et ladite deuxième partie (3B) de ladite première face principale (3), et **en ce que** le dispositif comporte une plaque (20) transparente munie d'au moins deux électrodes (21) conductrices transparentes, les électrodes (21) étant liées à une nappe (22) de connexion, ladite plaque (20) étant disposée au-dessus de ladite première partie (3A) de la première face principale (3) de la lame optique (2) et en saillie par rapport à la deuxième partie (3B) de la première face principale (3) de la lame optique (2), créant une lame d'air, une face de ladite plaque (20) comportant une surface (30) d'apposition de doigt (6).

2. Dispositif (1) optique d'acquisition d'empreinte digitale selon la revendication précédente dans lequel la source (S) lumineuse et la lame optique (2) étant mutuellement agencés de manière telle que le faisceau lumineux, émis par la source lumineuse (S) puis parvenant sur le doigt (6) apposé en regard de la surface d'acquisition (5) de la première face principale (3) afin d'éclairer ledit doigt (6), se propage (7₂) ensuite, après réflexion et diffusion par le doigt (6), à l'intérieur de la lame optique (2) avec réflexions multiples alternativement sur les première et seconde faces principales (3, 4) de celui-ci pour parvenir jusqu'à la seconde extrémité (B) de la lame optique (2).

3. Dispositif, selon l'une quelconque des revendications précédentes, ladite lame optique (2) possède, à sa seconde extrémité (B), une face de sortie (8) inclinée, de manière à être frappée sensiblement perpendiculairement par le faisceau lumineux (7₂) .

4. Dispositif, selon la revendication précédente, dans lequel la face de sortie (8) est orientée telle qu'elle forme une excroissance en pointe, la première face principale (3) et la seconde face principale (4) opposée de la lame optique (2) formant chacune une base comportant au moins six côtés.

5. Dispositif, selon l'une quelconque des revendications précédentes, dans lequel l'objectif focaliseur (9) possède une surface d'entrée (9₁) et une surface opposée de sortie (9₂ ) de manière à former une lentille convergente , l'objectif focaliseur (9) est situé en aval de la lame optique (2), il est disposé en aval et en regard du premier miroir (10) , notamment avec un axe optique (7₃) de l'objectif focaliseur s'étendant presque parallèlement à une arête délimitant la face de sortie (8) et la première face principale (3) .

6. Dispositif, selon l'une quelconque des revendications 3 à 5 , dans lequel , ladite face de sortie (8) comporte une lentille (80) de surface sphérique ou asphérique.

7. Dispositif, selon l'une quelconque des revendications précédentes , dans lequel la plaque (20) forme un prisme à base rectangulaire, notamment un parallélépipède plat, comportant deux faces principales opposées dont une première est en couplage optique avec la surface d'acquisition (5) de la première face principale (3) de la lame optique (2), et une deuxième dont une partie est en regard de la surface d'acquisition (5) et constitue la surface (30) d'apposition de doigt (6).

8. Dispositif, selon l'une quelconque des revendications précédentes , dans lequel le dispositif comprend un capot externe comportant une ouverture délimitant la surface (30) d'apposition, une jonction entre la surface (30) d'apposition et le capot étant réalisée par un cordon d'étanchéité (28).

9. Dispositif, selon l'une quelconque des revendications précédentes, dans lequel la surface d'apposition (30) est de superficie supérieure ou égale à 15,24 mm par 20,32 mm.

10. Dispositif, selon l'une quelconque des revendications précédentes, dans lequel les électrodes (21) conductrices transparentes sont réalisées par un dépôt transparent conducteur, métallique ou d'oxyde, tel qu'un dépôt métallique d'argent, notamment en nanostructure ou sous forme de grilles, ou tel qu'un dépôt d'oxyde transparent conducteur, notamment choisi parmi les oxydes métalliques tels que les oxydes d'argent en nanostructure ou sous forme de grilles par exemple, ou parmi les oxydes d'indium et d'étain, les oxydes de zinc et d'aluminium, les oxydes d'étain et d'antimoine, les oxydes d'indium et de zinc.

11. Dispositif, selon l'une quelconque des revendications précédentes, dans lequel la première partie (3A) de la première face principale (3) est surélevée par rapport à la deuxième partie (3B) de ladite première face principale (3) de la lame optique (2) d'au moins 0,30 mm, préférentiellement entre 0,45 mm et 0,65 mm.

12. Dispositif, selon l'une quelconque des revendications précédentes, dans lequel la plaque (20) s'étend longitudinalement en saillie par rapport à la surface d'acquisition (5) , en dépassant d'une distance d supérieure ou égale à 2 mm au-delà du décroché (D) en direction de la seconde extrémité (B), notamment entre 3 et 5 mm.

13. Dispositif, selon l'une quelconque des revendications précédentes, dans lequel la plaque (20) est collée à la lame optique (2).

14. Dispositif, selon la revendication précédente, dans lequel le collage est réalisé au moyen d'une colle optique transparente et flexible, notamment résistante aux ultrasons.

15. Dispositif, selon l'une quelconque des revendications précédentes, dans lequel le dispositif a une épaisseur inférieure ou égale à 15 mm.
